# EUROPEAN PATENT SPECIFICATION

(11) **EP 3 118 400 B1**
(45) Date of publication and mention of the grant of the patent: **27.11.2019**
(21) Application number: 15761920.6
(22) Date of filing: 13.03.2015
(51) Int. Cl.: E05B 85/16, B60J 5/04, E05B 17/18

(54) **VEHICLE DOOR HANDLE**
FAHRZEUGTÜRGRIFF
POIGNÉE DE PORTIÈRE DE VÉHICULE

(30) Priority: 14.03.2014 JP 2014052243
(43) Date of publication of application: 18.01.2017
(73) Proprietor: Alpha Corporation, Yokohama-shi, Kanagawa 236-0004 (JP)
(72) Inventor: TOYAMA Takao, Yokohama-shi Kanagawa 236-0004 (JP)
(74) Representative: Weickmann & Weickmann PartmbB
(86) International application number: PCT/JP2015/057520
(87) International publication number: WO 2015/137492

(56) References cited:
- EP-A2- 2 642 049
- EP-A2- 2 642 049
- JP-A- 2008 302 876
- JP-A- 2012 112 201
- JP-A- 2013 231 301
- US-A- 2 564 012
- US-A- 2 585 331
- US-A1- 2008 190 157

## Description

### [Technical Field]

The present disclosure relates to a door handle for a vehicle.

### [Background Art]

JP2010501746 A discloses a door handle that is handled when a door fixed to a vehicle is operated to open and close. A lock cylinder (a cylinder lock) is fixed to the door. A movable grip (a door handle) has one end which is connected to the door in a rotatable manner and the other end which extends to a position which is adjacent to the cylinder lock.

In the device of JP2010501746 A, since the cylinder lock is disposed to be adjacent to the door handle in a state where the door handle is mounted on the vehicle, a boundary line appears between the door handle and the cylinder lock. According to this, there is a necessity to consider design uniformity between the door handle and the cylinder lock, in addition to damaging of the door handle design continuity, and thus the degree of freedom in design is reduced.

In order to solve this, it is possible to extend the door handle to a placement area of the cylinder lock. However, in this case, an operation opening must be opened in the door handle in order to access the cylinder lock. As a result, there is a problem that it is difficult to secure the design continuity. Even if the operation opening is closed by means of a cap member or the like, since a material end of the cap member appears on a surface of the door handle, the problem cannot be solved. US2564012 A and US2585331 A disclose other door handles for a vehicle with a decoration member which covers almost the entire area in a longitudinal direction of the handle main body.

### [Summary of Invention]

The present disclosure relates to a door handle for a vehicle that improves appearance and has high design freedom. In addition, the present disclosure relates to a door handle device for a vehicle in which the door handle is used.

### [Brief Description of Drawings]

Fig. 1 is a cross-sectional view illustrating a handle device.
Fig. 2 is a cross-sectional view taken along line 2A-2A in Fig. 1.
Fig. 3 is a plan view illustrating a door handle.

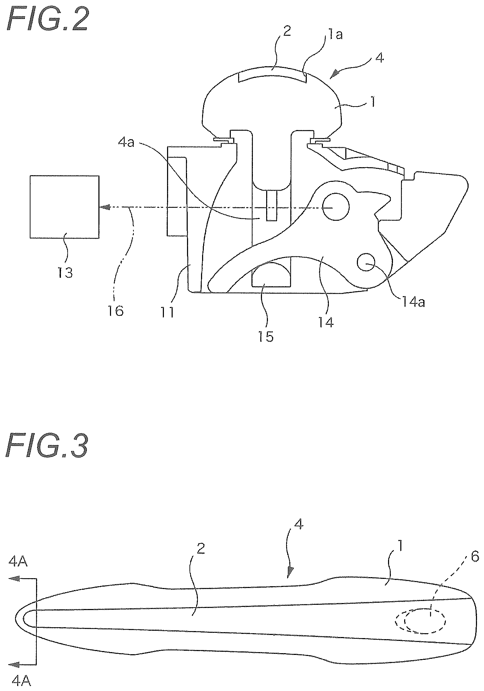

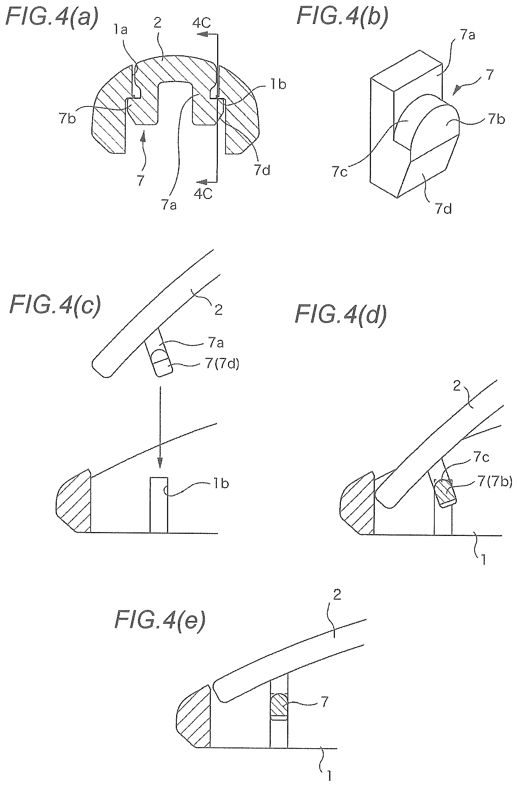

Fig. 4 (a) is a view illustrating a front end portion of a finisher and is a cross-sectional view taken along line 4A-4A in Fig. 3. Fig. 4 (b) is an enlarged perspective view illustrating a hinge engaging portion. Fig. 4 (c) is a view illustrating an operation of mounting the finisher on a handle main body. Fig. 4 (d) is a cross-sectional view taken along line 4C-4C in Fig. 4 (a) illustrating a state where the hinge engaging portion of the finisher is engaged with the handle main body. Fig. 4(e) is a cross-sectional view taken along line 4C-4C in Fig. 4 (a) illustrating a state where the finisher is rotated about the hinge engaging portion.
Fig. 5 (a) is a view illustrating a rear end portion of the finisher and a view illustrating a state where the finisher is rotated about the hinge engaging portion. Fig. 5 (b) is a view illustrating an elastic diameter engaging portion in an initial rotational position of the door handle. Fig. 5 (c) is a view illustrating a state where the door handle is rotated from the initial rotational position thereof.

### [Description of Embodiments]

Hereinafter, an embodiment will be described with reference to the attached drawings. In addition, the attached drawings and the following disclosure are illustrative of the present disclosure and these are not intended to limit the subject matters described in the claims.

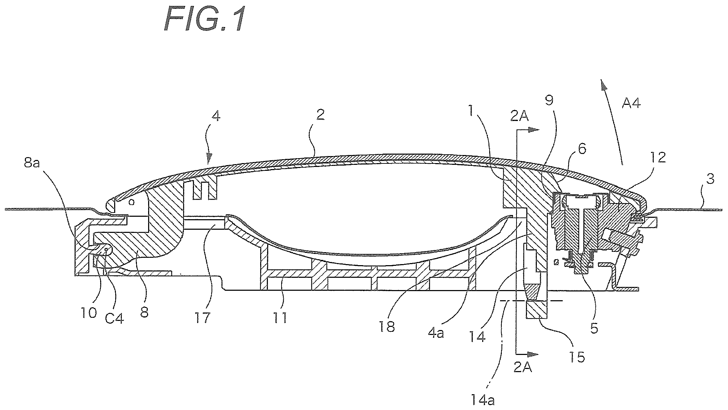

Figs. 1 and 2 are views illustrating a handle device for a vehicle according to an embodiment. The handle device is an outside handle device that is fixed to an outer wall surface (a door outer panel) of a door 3 of the vehicle to be used. A door handle device includes a handle base 11 that is fixed to a rear surface of the door panel, a door handle 4 that is connected to the handle base 11 in a posture in which a longitudinal direction thereof is parallel to a longitudinal direction of the vehicle, and a lock holding block 12 that is fixed to the handle base 11. The cylinder lock 5 capable of being operated to be rotated between a locking position and a unlocking position is fixed in the lock holding block 12.

The door handle 4 includes a hinge projection piece 8 on the front end portion thereof (hereinafter, in the specification, the left side in Figs. 1 and 3 that are directed to the front side of an ordinary vehicle is referred to as "front side"). The door handle 4 is connected to the door 3 to be rotatable about a fitting portion between a hinge concave portion 8a that is provided on the front end of the hinge projection piece 8 and a projecting plate shaped hinge receiving portion 10 that is formed on the handle base 11 as a rotation center.

A latch operating lever 14 is connected to the handle base 11 to be rotatable about a pivot shaft 14a. A latch drive unit 15 that is formed on the distal end portion of an operating leg portion 4a which is projected from the door handle 4 is engaged with the latch operating lever 14.

When the door handle 4 is operated to be rotated about a rotation center (C4) from an initial rotation position which is illustrated by a solid line in Fig. 1 in an arrow (A4) direction, the door handle 4 is pulled out from the door 3. According to this, the latch operating lever 14 is rotated with the latch operating lever being pushed by the latch drive unit 15. The rotation of the latch operating lever 14 is transferred to a door latch device 13 that is fixed within the door 3 via a transmission member 16 such as a cable device.

The assembly of the handle device described above is performed, by the door handle 4 being slid to the front side, after the hinge projection piece 8 of the door handle 4 is inserted into the door 3 via a front opening 17 that is opened at the door panel and the handle base 11, and the operating leg portion 4a is inserted into the door 3 via a rear opening 18.

The hinge concave portion 8a and the hinge receiving portion 10 are engaged with each other by the door handle 4 being moved to the front side, and the latch operating lever 14 that is biased to an interference position with respect to a translational movement path to the front side of the latch drive unit 15 by a spring (not shown) slides over the latch drive unit 15 against the biasing force and thereafter, the latch operating lever 14 biases the latch drive unit 15 toward an inner portion of the door 3 and thus the door handle 4 is maintained on the initial rotation position side.

Subsequently, when the lock holding block 12 is fixed to the rear opening 18 of the handle base 11, a rear end surface of a stopper portion 9 that is formed on the proximal end of the operating leg portion 4a of the door handle 4 is in contact with the lock holding block 12 and the movement of the handle base 11 into the rear side is restricted, and thus the handle base 11 is maintained at the predetermined position.

The door handle 4 is formed by a finisher as a decoration member 2 being mounted on the handle main body 1 as a strength member having the hinge projection piece 8 and the operating leg portion 4a. The rear end of the handle main body 1 extends to a position that covers the cylinder lock 5. The operation opening 6 to the cylinder lock 5 is opened in a position in which the cylinder lock 5 and the handle main body 1 are overlapped with each other when seen from the front side in the initial rotation position. A portion of the operation opening 6 corresponding to a surface of the cylinder lock 5 has a size required to insert a unlocking key into the cylinder lock 5 and to rotate the unlocking key, and a portion corresponding to the lock holding block 12 has a size that does not interfere with a rotation trajectory about the rotation center (C4) of the handle main body 1 and is capable of fitting the lock holding block 12.

The finisher 2 is formed of a synthetic resin material that is subject to a surface treatment such as plating, if necessary. The finisher 2 is disposed on the surface portion of the handle main body 1 over substantially the entire length in the longitudinal direction. The finisher 2 is set to have a shape that completely blocks at least the operation opening 6. The finisher 2 may be formed to cover the surface portion of the handle main body 1 over the entire surface thereof. As illustrated in Fig. 3, the finisher 2 may be disposed along a center portion in the width direction with the handle main body 1 exposed at both ends of the finisher while being subjected to an appropriate design treatment.

In a case where the finisher 2 is disposed only on the center portion in the width direction, as illustrated in Fig. 2, a finisher fitting concave groove 1a to which the finisher 2 is fitted is provided in the handle main body 1.

As illustrated in Figs. 4 (a) to 4 (e), the hinge engaging portion 7 is provided on the front end of the finisher 2 and the engaged portion 1b is provided on the handle main body 1. As illustrated in Figs. 4 (a) and 4 (b), the hinge engaging portion 7 is formed by an engaging projection portion 7b being projected on the outer surface of an elastically deformable leg portion 7a that is suspended from both side edges of a surface piece of the finisher 2. An arc surface 7c is formed on the surface of the engaging projection portion 7b. An inclining surface 7d that gradually becomes thinner as it approaches the free end in the free end portion is formed on the side wall portion of the engaging projection portion 7b.

The engaged portion 1b of the handle main body 1 is formed by cutting an inner wall surface of the finisher fitting concave groove 1a penetrating the handle main body 1 up to the rear surface into a concave shape. As illustrated in Fig. 4 (c), after the inclining surface 7d of the hinge engaging portion 7 is in contact with the opening end of the finisher fitting concave groove 1a with the finisher 2 slightly inclined, when the finisher 2 is pushed inward, the leg portion 7a is elastically deformed, the engaging projection portion 7b penetrates the inside of the finisher fitting concave groove 1a, and the leg portion 7a is restored to its original position when the engaged portion is passed through, and thus the leg portion 7a is engaged with the engaged portion 1b (see Fig. 4 (d)).

In this state, as illustrated in Fig. 4 (e), the arc surface 7c is in contact with a ceiling surface of the engaged portion 1b, and then the finisher 2 is capable of rotating about the center of the arc surface 7c.

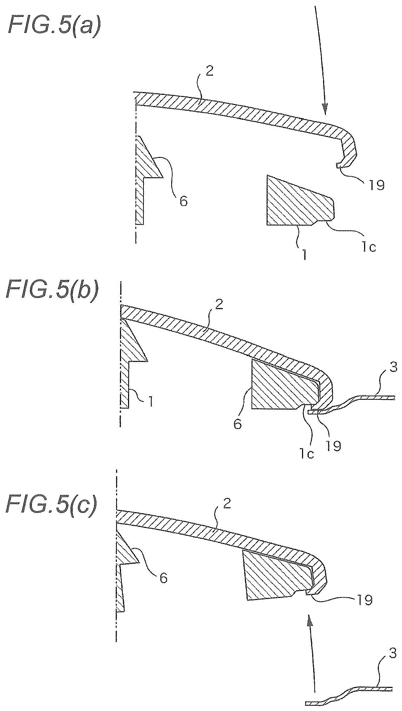

Further, as illustrated in Fig. 5 (a), an elastic engaging portion 19 having a hook shape that projects from an end edge under a rear end of the finisher 2 to the front side is formed on the rear end of the finisher 2. The rotation end engaged portion 1c having a groove shape with a depth corresponding to a plate thickness of the elastic engaging portion 19 is formed on the rear end of the handle main body 1.

As illustrated in Fig. 5 (a), the elastic engaging portion 19 is formed to have a size that is butt-jointed on the rear end of the handle main body 1 when the elastic engaging portion 19 rotates about the engaging portion between the elastic engaging portion 19 and the engaging projection portion 7b as described above, as a rotation center. After the elastic engaging portion 19 is butt-jointed on the handle main body, when the rear end of the finisher 2 is pushed, the elastic engaging portion 19 or the entire finisher 2 is elastically deformed and passes through the interference portion of the handle main body 1, and then the elastic engaging portion 19 or the entire finisher 2 is elastically restored, and thus the elastic engaging portion 19 is engaged with the rotation end engaged portion 1c of the handle main body 1.

In this state, when the door handle 4 is mounted on the handle base 11, in the initial rotation position, as illustrated in Fig. 5 (b), the elastic engaging portion 19 is not exposed to the outside by being positioned between the surface of the door 3 and the end portion of the handle main body 1. For this reason, inadvertent withdrawal from the handle main body 1 of the finisher 2 can be reliably prevented. In this case, as illustrated in Fig. 5 (b), if a gap between the rotation end engaged portion 1c of the handle main body 1 and the surface of the door 3 is set to have a size in which a trajectory when the elastic engaging portion 19 is disengaged from the rotation end engaged portion 1c interferes with the gap, the withdrawal is more reliably prevented.

As above, the operation opening 6 to the cylinder lock 5 is blocked in a state where the finisher 2 is mounted. In a state where access to the cylinder lock 5 is needed at the time of an emergency, or the like, as illustrated in Fig. 5 (c), when the door handle 4 is operated to be rotated about the rotation center (C4) and the elastic engaging portion 19 is exposed to the outside, since a disengagement operation of the elastically engaging portion can be easily performed and the connection state between the handle main body 1 and the door handle 4 is maintained in the other end portion, the finisher is not withdrawn from the handle main body 1 and operability is improved.

According to an embodiment, the door handle 4 for a vehicle that is attached to the door 3 for the vehicle and is handled at the time of the opening and closing of the door 3 includes a handle main body 1 and a decoration member 2 disposed on a surface of the handle main body 1.

The operation opening 6 to the cylinder lock 5 that is fixed to the door 3 is opened in the handle main body 1.

The decoration member 2 blocks the operation opening 6 by covering almost the entire length of a portion of the handle main body 1 exposed from the door 3 being mounted on the handle main body 1 in the blocking posture.

The decoration member 2 can release the blocking of the operation opening 6 by a dismounting operation from the handle main body 1 or a transition operation to a non-blocking posture.

The door handle 4 is formed by the decoration member 2 being mounted on the surface of the handle main body 1 that substantially serves as a handhold for a user as a strength member. The operation opening 6 used in access to the cylinder lock 5 is opened in the handle main body 1.

In the surface of the handle main body 1, the operation opening 6 of the cylinder lock 5 is covered by the decoration member 2 being mounted over almost the entire length of the handle main body 1. For this reason, the design continuation of the entire handle main body 1 is prevented from being inhibited by the operation opening 6 being exposed to the surface.

In addition, since it is possible for the operation opening 6 to be exposed to the outside by the decoration member 2 being removed from the handle main body 1 or the decoration member 2 being transited from the blocking posture to the non-blocking posture, it is possible to operate the cylinder lock 5 at any time necessary.

The decoration member 2 may cover almost the entire area of the surface of the door handle 4. As illustrated in Fig. 3, the decoration member 2 may be disposed in a belt shape on the center portion in the width direction, as long as the design continuity is not interfered with. In addition, a start end position of the decoration member 2 may be disposed on the slightly rearward position from the start end of the door handle 4, as long as the terminal end is positioned at the center portion of the door handle 4 and thus the decoration member 2 does not interfere with the design continuity in the longitudinal direction.

The decoration member 2 may be configured to be mounted on the handle main body 1 by being operated to be rotated about the engaging portion between the hinge engaging portion 7 formed on the one end portion and the handle main body 1 as a rotation center and thus being elastically engaged with the other end of the handle main body 1.

Various structures can be taken at the mounting of the decoration member 2 on the handle main body 1. However, if the structure described above is taken, since the decoration member 2 is maintained on the handle main body 1 as a both ends supported beam, rattling, lifting, or the like is not likely to be generated and it is possible to reliably mount the decoration member 2 to the handle main body 1, and a detaching operation becomes also easy.

In addition, in a case where the engaging end is set to an intermediate portion of the handle main body 1, when the intermediate portion is set to a rotation start end, the structure in a supporting point is complicated without affecting the outer surface and connecting workability is lowered, and when the intermediate portion is set to the rotation end, operability is lowered by being difficult to perform a disengaging operation by the user. In contrast to this, as in the invention, by setting both ends to the engaging end, it is possible to improve both assembly efficiency and the operability, in addition to simplifying the structure.

The handle main body 1 is fixed to the door 3 in a rotatable manner so that one end thereof is pulled out and, the elastic engaging portion 19 of the decoration member 2 to the handle main body 1 is capable of being configured to be disposed on a surface of a rotational end of the handle main body 1 on a pulling-out operation side with respect to the door 3, the surface facing a surface of the door 3.

In this disclosure, the door handle 4 is operated to be rotated by pulling out one end thereof, and the elastic engaging portion 19 to the handle main body 1 of the decoration member 2 is formed on a surface of the pull out end of the handle main body 1 facing the surface of the door 3. As a result, when the door handle 4 is positioned at the unused position, since the engaging portion of the decoration member 2 is not exposed to the surface, the decoration member 2 is prevented from being accidently disengaged and being withdrawn.

In the disclosure, the door handle device in which the door handle 4 is used can be configured to include the cylinder lock 5 that is fixed to the door 3 of the vehicle, and the door handle 4 that has one end portion which is connected to the door 3 of the vehicle in a rotatable manner and the other end portion which covers the cylinder lock 5 and blocks the operation opening 6 to the cylinder lock 5 by the decoration member 2.

The hinge projection piece 8 and the stopper portion 9 may be provided in both ends of the door handle 4, the handle base 11 that includes the hinge receiving portion 10 which receives the hinge projection piece 8 of the door handle 4 being subjected to a translational movement operation in the longitudinal direction and which restrains the translational movement of the hinge projection piece 8 in the movement direction at the time of mounting and the front and rear direction of the door 3 translational movement to provide the rotation center of the door handle 4 may be fixed to the door 3, and the translational movement of the door handle 4 in a direction toward the stopper portion 9 may be restricted by the lock holding block 12 that holds the cylinder lock 5 being fixed to the door 3 after the door handle 4 is mounted on the handle base 11 and being in contact with the stopper portion 9 of the door handle 4.

The handle base 11 is fixed to the door 3 in advance, and the mounting of the door handle 4 to the door 3 is performed to restrain the withdrawal of the door handle 4 by fixing the lock holding block 12 to the door 3 after the hinge projection piece 8 which is formed on the one end of the door handle 4 is mounted on the hinge receiving portion 10 of the handle base 11 by the door handle 4 being moved in the longitudinal direction.

In the present disclosure taking a structure in which the door handle 4 is connected to the handle base 11 without using a pivot shaft, since the handle base 11 and the door handle 4 are not required to be assembled in advance, it is possible to block visibility from the outside by arranging the handle base 11 to the rear surface of the door panel, which results in improvement in design freedom.

In this case, the stopper portion 9 can be used as an operating body of the latch operating lever 14.

According to the present disclosure, since the member termination end line, or the like that breaks continuity in the door handle surface in the longitudinal direction does not occur, it is possible to improve the appearance.

The invention is described with reference to the detailed or specific embodiment. However, it is apparent to those skilled in the art that various changes and modifications can be added to the embodiment without departing from the scope of the present invention, as defined by the appended claims.

### Reference Signs List

- 1:: handle main body
- 2:: decoration member
- 3:: door
- 4:: door handle
- 5:: cylinder lock
- 6:: operation opening
- 7:: hinge engaging portion
- 8:: hinge projection piece
- 9:: stopper portion
- 10:: hinge receiving portion
- 11:: handle base
- 12:: lock holding block
- 13:: door latch device
- 14:: latch operating lever
- 15:: latch drive unit

## Claims

1. A door handle (4) for a vehicle, which is mounted on a door (3) of the vehicle and which is handled when the door (3) is operated to open or close, the door handle (4) comprising:
a handle main body (1); and
a decoration member (2) that is disposed on a surface of the handle main body (1),
wherein an operation opening (6) to a cylinder lock (5) fixed to the door is opened in the handle main body (1),
wherein the decoration member (2) blocks the operation opening (6) in a blocking posture,
wherein the blocking of the operation opening (6) is capable of being released by detaching the decoration member (2) from the handle main body (1) or by operating the decoration member (2) to transit to a non-blocking posture,
wherein the decoration member (2) covers almost the entire area in a longitudinal direction of the handle main body (1) so that a design continuation of the handle main body (1) is prevented from being inhibited by the operating opening (6) being exposed to the surface of the door handle (4) and an appearance is improved,
**characterized in that**
the decoration member (2) has one end portion which is connected to the handle main body (1) in a rotatable manner and the other end portion which covers the cylinder lock (5).

2. The door handle (4) according to claim 1,
wherein a hinge engaging portion (7) is provided on one end portion of the decoration member (2),
wherein the decoration member (2) is operated to be rotated about an engaged portion (1b), provided on the handle main body (1), between the hinge engaging portion (7) and the handle main body (1) as a rotation center, and
the hinge engaging portion (7) is formed by an engaging projection portion (7b) being projected on an outer surface of an elastically deformable leg portion (7a) that is suspended from both side edges of a surface piece of the decoration member (2).

3. The door handle (4) according to claim 2,
wherein an arc surface (7c) is formed on the surface of the engaging projection portion (7b) for contacting a ceiling surface of the engaged portion (1b) for enabling rotation of the decoration member (2) about the center of the arc surface (7c).

4. The door handle (4) according to claim 3,
wherein the ceiling surface is a surface of the handle main body (1) facing in the direction of the door.

5. The door handle (4) according to one of claims 2 to 4,
wherein an inclining surface (7d) that gradually becomes thinner as it approaches a free end in an free end portion of the engaging projection portion (7b) is formed on a side wall portion of the engaging projection portion (7b) .

6. The door handle (4) according to one of claims 2 to 5,
wherein the other end of the decoration member (2) is elastically engaged with the handle main body (1), and
wherein the decoration member (2) is mounted on the handle main body (1).

7. The door handle (4) according to claim 6,
wherein the handle main body (1) is fixed to the door (3) in a rotatable manner in which one end of the handle main body (1) is pulled out, and
wherein an elastic engaging portion (19) of the decoration member (2) to the handle main body (1) is disposed on a surface facing a surface of the door (3) of a rotational end in a pulling-out operation side of the handle main body (1) against the door (3).

8. The door handle (4) according to any one of claims 1 to 7,
wherein an exposed portion of the handle main body (1) which is exposed from the door (3), is covered over an entire length with the decoration member (2) in the blocking posture.

9. A door handle device for a vehicle, comprising:
a cylinder lock (5) that is fixed to a door (3) of the vehicle; and
the door handle (4) according to any one of claims 1 to 8 including one end portion that is connected to the door of the vehicle in a rotatable manner, and the other end portion that covers the cylinder lock (5) with the decoration member (2) and that blocks the operation opening (6) to the cylinder lock (5) with the decoration member (2).

10. The door handle device according to claim 9,
wherein a hinge projection piece (8) and a stopper portion (9) are provided in both ends of the door handle (4),
wherein a handle base (11) including a hinge receiving portion (10) is fixed to the door,
wherein the hinge receiving portion (10) receives the hinge projection piece (8) of the door handle (4) in which a translational movement operation is performed in the longitudinal direction,
wherein the hinge receiving portion (10) restrains the translational movement of the hinge projection piece (8) in a movement direction at the time of mounting and a front and rear direction of the door (3) so as to provide the rotation center (C4) of the door handle (4), and
wherein a lock holding block (12) holding the cylinder lock (5) is fixed to the door (3) and abuts the stopper portion (9) of the door handle (4) after the door handle (4) is mounted on the handle base (11) and so as to restrict the translational movement of the door (3) in a direction toward the stopper portion (9) of the door handle (4).

11. The door handle device according to claim 10,
wherein the handle base (11) includes a latch operating lever (14) which is connected to a door latch device (13) fixed within the door (3),
wherein the handle base (11) is fixed to a rear surface of a door panel, and
wherein a latch drive unit (15) driving the latch operating lever (14) in response to a rotational operation of the door handle (4), is provided in the stopper portion (9) of the door handle (4) which is inserted into the door (3) when being mounted on the door (3).

## Patentansprüche

1. Türgriff (4) für ein Fahrzeug, der an einer Tür (3) des Fahrzeugs montiert ist und der gehandhabt wird, wenn die Tür (3) zum Öffnen oder Schließen betätigt wird, wobei der Türgriff (4) umfasst:
einen Griffhauptkörper (1); und
ein Dekorationselement (2), das an einer Oberfläche des Griffhauptkörpers (1) angeordnet ist,
wobei eine Betätigungsöffnung (6) hin zu einem Zylinderschloss (5), das an der Tür befestigt ist, in dem Griffhauptkörper (1) offen ist,
wobei das Dekorationselement (2) die Betätigungsöffnung (6) in einer Blockierposition blockiert,
wobei das Blockieren der Betätigungsöffnung (6) geeignet ist zum freigegeben werden durch Trennen des Dekorationselements (2) von dem Griffhauptkörper (1) oder durch Betätigen des Dekorationselements (2) zur Bewegung in eine nicht blockierende Position,
wobei das Dekorationselement (2) nahezu den gesamten Bereich in einer longitudinalen Richtung des Griffhauptkörpers (1) bedeckt, so dass eine Kontinuität des Designs des Hauptkörpers (1) abgehalten wird durch ein Freiliegen der Betriebsöffnung (6) zu der Oberfläche des Türgriffs (4) gestört zu werden und so dass ein Aussehen verbessert ist,
**dadurch gekennzeichnet, dass**
das Dekorationselement (2) einen Endbereich, der mit dem Griffhauptkörper (1) in einer rotierbaren Weise verbunden ist, und den anderen Endbereich aufweist, der das Zylinderschloss (5) bedeckt.

2. Türgriff (4) nach Anspruch 1,
wobei ein Gelenkeingriffsbereich (7) bereitgestellt ist an einem Endbereich des Dekorationselements (2),
wobei das Dekorationselement (2) betätigt wird, um um einen Eingriffsbereich (1b) rotiert zu werden, der an dem Griffhauptkörper (1) bereitgestellt ist zwischen dem Gelenkeingriffsbereich (7) und dem Griffhauptkörper (1) als ein Rotationszentrum, und
wobei der Gelenkeingriffsbereich (7) ausgebildet ist durch einen Eingriffsvorsprungsbereich (7b), der von einer äußeren Fläche eines elastisch defomierbaren Beinbereichs (7a) vorspringt, der von beiden Seitenrändern eines Oberflächenstücks des Dekorationselements (2) gehalten ist.

3. Türgriff (4) nach Anspruch 2,
wobei eine Bogenfläche (7c) an der Fläche des Eingriffsvorsprungsbereich (7b) ausgebildet ist zum Kontaktieren einer Deckenfläche des Eingriffsbereichs (1b) zum Ermöglichen einer Rotation des Dekorationselements (2) um das Zentrum der Bogenfläche (7c) herum.

4. Türgriff (4) nach Anspruch 3,
wobei die Deckenfläche eine Fläche des Griffhauptkörpers (1) ist, die in Richtung der Tür gerichtet ist.

5. Türgriff (4) nach einem der Ansprüche 2 bis 4,
wobei eine geneigte Fläche (7d), die allmählich dünner wird zugehend auf ein freies Ende in einem freien Endbereich des Eingriffsvorsprungsbereichs (7b), an einem Seitenwandbereich des Eingriffsvorsprungsbereich (7b) ausgebildet ist.

6. Türgriff (4) nach einem der Ansprüche 2 bis 5,
wobei das andere Ende des Dekorationselements (2) mit dem Griffhauptkörper (1) elastisch im Eingriff steht, und
wobei das Dekorationselement (2) an dem Griffhauptkörper (1) angebracht ist.

7. Türgriff (4) nach Anspruch 6,
wobei der Griffhauptkörper (1) an der Tür (3) in einer rotierbaren Weise fixiert ist, bei der ein Ende des Griffhauptkörpers (1) herausgezogen wird, und
wobei ein elastischer Eingriffsbereich (19) des Dekorationselements (2) zu dem Griffhauptkörper (1) angeordnet ist auf einer Fläche, die gerichtet ist auf eine Fläche der Türe (3), eines Rotationsendes einer Herausziehbetätigungsseite des Griffhauptkörpers (1) gegen die Türe (3).

8. Türgriff (4) nach irgendeinem der Ansprüche 1 bis 7,
wobei ein exponierter Bereich des Griffhauptkörpers (1), der von der Tür (3) exponiert ist, über eine gesamte Länge mit dem Dekorationselement (2) in der Blockierposition bedeckt ist.

9. Türgriffvorrichtung für ein Fahrzeug umfassend:
ein Zylinderschloss (5), das an einer Tür (3) des Fahrzeugs fixiert ist; und
der Türgriff nach irgendeinem der Ansprüche 1 bis 8 beinhaltend einen Endbereich, der mit der Tür des Fahrzeugs in einer rotierbaren Weise verbunden ist, und den anderen Endbereich, der das Zylinderschloss (5) mit dem Dekorationselement (2) bedeckt und das die Betätigungsöffnung (6) zu dem Zylinderschloss (5) mit dem Dekorationselement (2) blockiert.

10. Türgriffvorrichtung nach Anspruch 9,
wobei ein Gelenkvorsprungsstück (8) und ein Stopperbereich (9) in beiden Enden des Türgriffs (4) bereitgestellt sind,
wobei eine Griffbasis (11) beinhaltend einen Gelenkaufnahmebereich (10) an der Tür fixiert ist,
wobei der Gelenkaufnahmebereich (10) das Gelenkvorsprungsstück (8) des Türgriffs (4) empfängt, bei dem eine translatorische Bewegungsbetätigung in der longitudinalen Richtung ausgeführt wird,
wobei der Gelenkaufnahmebereich (10) die translatorische Bewegung des Gelenkvorsprungsstücks (8) in einer Bewegungsrichtung zum Zeitpunkt einer Montage und in eine vordere und hintere Richtung der Tür (3) begrenzt, um das Rotationszentrum (C4) des Türgriffs (4) bereitzustellen, und
wobei ein Schlosshalteblock (12), der das Zylinderschloss (5) hält, an der Tür (3) fixiert ist und an den Stopperbereich (9) des Türgriffs (4) anliegt, nachdem der Türgriff (4) an der Griffbasis (11) angebracht ist, um die translatorische Bewegung der Tür (3) in einer Richtung hin zu dem Stopperbereich (9) des Türgriffs (4) zu begrenzen.

11. Türgriffvorrichtung nach Anspruch 10,
wobei die Griffbasis (11) einen Riegelbetätigungshebel (14) beinhaltet, der mit einer Türriegelvorrichtung (13) verbunden ist, die innerhalb der Tür (3) fixiert ist,
wobei die Griffbasis (11) an einer hinteren Fläche eines Türpaneels fixiert ist, und
wobei eine Riegelantriebseinheit (15), die den Riegelbetätigungshebel (14) in Antwort auf eine rotierende Betätigung des Türgriffs (4) antreibt, in dem Stopperbereich (9) des Türgriffs (4) bereitgestellt ist, der in die Tür (3) eingeführt wird, wenn er an der Tür (3) angebracht wird.

## Revendications

1. Poignée de portière (4) d'un véhicule, qui est montée sur une portière (3) du véhicule et qui est manipulée lorsque la portière (3) est actionnée pour s'ouvrir ou se fermer, la poignée de portière (4) comprenant :
un corps principal de poignée (1) ; et
un organe décoratif (2) qui est disposé sur une surface du corps principal de poignée (1),
dans laquelle une ouverture d'actionnement (6) sur une serrure à cylindre (5) fixée sur la portière est ouverte dans le corps principal de poignée (1),
dans laquelle l'organe décoratif (2) bloque l'ouverture d'actionnement (6) dans une posture de blocage,
dans laquelle le blocage de l'ouverture d'actionnement (6) est capable d'être libéré par le détachement de l'organe décoratif (2) du corps principal de poignée (1) ou par l'actionnement de l'organe décoratif (2) pour passer à une posture de non-blocage,
dans laquelle l'organe décoratif (2) recouvre presque l'aire complète dans le sens longitudinal du corps principal de poignée (1) de manière à empêcher qu'une continuation de conception du corps principal de poignée (1) ne soit interdite par l'exposition de l'ouverture d'actionnement (6) à la surface de la poignée de portière (4) et à améliorer une apparence,
**caractérisée en ce que**
l'organe décoratif (2) a une portion d'extrémité qui est reliée au corps principal de poignée (1) d'une manière rotative et l'autre portion d'extrémité qui recouvre la serrure à cylindre (5).

2. Poignée de portière (4) selon la revendication 1,
dans laquelle une portion de mise en prise de charnière (7) est prévue sur une portion d'extrémité de l'organe décoratif (2),
dans laquelle l'organe décoratif (2) est actionné pour être tourné autour d'une portion mise en prise (1b), prévue sur le corps principal de poignée (1), entre la portion de mise en prise de charnière (7) et le corps principal de poignée (1) en tant que centre de rotation, et
la portion de mise en prise de charnière (7) est formée par une portion saillante de mise en prise (7b) faisant saillie sur une surface extérieure d'une portion de branche élastiquement déformable (7a) en suspension depuis les deux bords latéraux d'une pièce de surface de l'organe décoratif (2).

3. Poignée de portière (4) selon la revendication 2,
dans laquelle une surface arquée (7c) est formée sur la surface de la portion saillante de mise en prise (7b) pour venir en contact avec une surface de plafond de la portion mise en prise (1b) afin de permettre une rotation de l'organe décoratif (2) autour du centre de la surface arquée (7c).

4. Poignée de portière (4) selon la revendication 3,
dans laquelle la surface de plafond est une surface du corps principal de poignée (1) faisant face dans le sens de la portière.

5. Poignée de portière (4) selon l'une des revendications 2 à 4,
dans laquelle une surface d'inclinaison (7d) devenant progressivement plus mince à mesure qu'elle s'approche d'une extrémité libre dans une portion d'extrémité libre de la portion saillante de mise en prise (7b) est formée sur une portion de paroi latérale de la portion saillante de mise en prise (7b).

6. Poignée de portière (4) selon l'une des revendications 2 à 5,
dans laquelle l'autre extrémité de l'organe décoratif (2) est élastiquement mise en prise avec le corps principal de poignée (1), et
dans laquelle l'organe décoratif (2) est monté sur le corps principal de poignée (1).

7. Poignée de portière (4) selon la revendication 6,
dans laquelle le corps principal de poignée (1) est fixé à la portière (3) d'une manière rotative selon laquelle une extrémité du corps principal de poignée (1) est tirée vers l'extérieur, et
dans laquelle une portion de mise en prise élastique (19) de l'organe décoratif (2) avec le corps principal de poignée (1) est disposée sur une surface faisant face à une surface de la portière (3) d'une extrémité rotationnelle dans un côté d'actionnement par tirage vers l'extérieur du corps principal de poignée (1) contre la portière (3).

8. Poignée de portière (4) selon l'une des revendications 1 à 7,
dans laquelle une portion exposée du corps principal de poignée (1), qui est exposée depuis la portière (3), est recouverte sur une longueur complète par l'organe décoratif (2) dans la posture de blocage.

9. Dispositif de poignée de portière d'un véhicule, comprenant :
une serrure à cylindre (5) qui est fixée à une portière (3) du véhicule ; et
la poignée de portière (4) selon l'une quelconque des revendications 1 à 8 incluant une portion d'extrémité qui est reliée à la portière du véhicule d'une manière rotative, et l'autre portion d'extrémité qui recouvre la serrure à cylindre (5) avec l'organe décoratif (2) et qui bloque l'ouverture d'actionnement (6) sur la serrure à cylindre (5) avec l'organe décoratif (2).

10. Dispositif de poignée de portière selon la revendication 9,
dans lequel une pièce saillante de charnière (8) et une portion de butée (9) sont prévues aux deux extrémités de la poignée de portière (4),
dans lequel une base de poignée (1) incluant une portion de réception de charnière (10) est fixée à la portière,
dans lequel la portion de réception de charnière (10) reçoit la pièce saillante de charnière (8) de la poignée de portière (4) dans laquelle un actionnement de mouvement de translation est effectué dans le sens longitudinal,
dans lequel la portion de réception de charnière (10) restreint le mouvement de translation de la pièce saillante de charnière (8) dans un sens de mouvement au moment du montage et dans un sens vers l'avant et vers l'arrière de la portière (3) de manière à fournir le centre de rotation (C4) de la poignée de portière (4), et
dans lequel un bloc de maintien de serrure (12) maintenant la serrure à cylindre (5) est fixé à la portière (3) et vient en butée contre la portion de butée (9) de la poignée de portière (4) après le montage de la poignée de portière (4) sur la base de poignée (11) et de manière à limiter le mouvement de translation de la portière (3) dans un sens vers la portion de butée (9) de la poignée de portière (4).

11. Dispositif de poignée de portière selon la revendication 10,
dans lequel la base de poignée (11) inclut un levier d'actionnement de loquet (14) qui est relié à un dispositif de loquet de portière (13) fixé à l'intérieur de la portière (3),
dans lequel la base de poignée (11) est fixée à une surface arrière d'un panneau de portière, et
dans lequel une unité d'entraînement de loquet (15), entraînant le levier d'actionnement de loquet (14) en réponse à un actionnement rotationnel de la poignée de portière (4), est prévue dans la portion de butée (9) de la poignée de portière (4) qui est insérée dans la portière (3) lors de son montage sur la portière (3).
